# EUROPÄISCHE PATENTSCHRIFT

(11) **EP 0 894 203 B1**
(45) Veröffentlichungstag und Bekanntmachung des Hinweises auf die Patenterteilung: **19.09.2001**
(21) Anmeldenummer: 97923723.7
(22) Anmeldetag: 04.04.1997
(51) Int. Cl.: F16B 39/24

(54) **Verwendung eines selbstspannenden Befestigungsringes**
Use of a self-clamping fastening ring
Usage d'une bague de fixation à auto-serrage

(30) Priorität: 17.04.1996 DE 19615130
(43) Veröffentlichungstag der Anmeldung: 03.02.1999
(73) Patentinhaber: Christian Bauer GmbH & Co., 73642 Welzheim (DE)
(72) Erfinder: SCHNEIDER, Kurt, D-73642 Welzheim (DE)
(74) Vertreter: Patentanwalts-Partnerschaft Rotermund + Pfusch
(86) Internationale Anmeldenummer: DE9700705
(87) Internationale Veröffentlichungsnummer: WO9739249

(56) Entgegenhaltungen:
- WO-A-86/07419
- DE-A- 2 300 064
- DE-C- 635 553

## Beschreibung

Die Erfindung besteht in der Verwendung einer mäanderförmigen Ringscheibe als Befestigungsring mit den Merkmalen des Anspruchs 1.

Eine Ringscheibe mit den gegenständlichen Merkmalen des Anspruchs 1 ist für eine Verwendung als Tellerfeder bereits aus US 4,680,847 bekannt.

Bekannt als Befestigungsringe sind vergleichbare mäanderförmige Ringe in der Form geschlitzter Ringe, die jeweils radial innen oder außen unter Spannung in eine Ringnut eines Trägerteiles eingelegt werden. Durch die Einbettung in einer Nut können diese Befestigungsringe axiale Kräfte übertragen und somit als Befestigungselement zur Abstützung axialer Kräfte dienen. Soll an einem Trägerteil in Form beispielsweise einer Welle oder eines Rohrstutzens mit einem solchen Befestigungsring ein zu befestigendes Teil axial exakt definiert gehalten werden, bedingt dies eine sehr genaue Fertigung einerseits des zu befestigenden Teiles in axialer Richtung zwischen dessen axialen Befestigungsflächen und der Lage der in dem Trägerteil anzubringenden Aufnahmenut für den geschlitzten Befestigungsring. Selbst bei genauester Fertigung ist meist eine axial spielfreie Befestigung praktisch nicht ausreichend sicher erreichbar. Darüber hinaus ist es mit derartigen Befestigungsringen nicht möglich, eine Einspannung eines zu befestigenden Teiles unter axial wirkender Federkraft zu erreichen. Um eine axial unter Federkraft stehende Einspannung zu erhalten, ist es bei solchen Befestigungsringen notwendig, ein Federelement zwischen dem Befestigungsring und dem zu befestigenden Teil einzusetzen. Ein solches Federelement kann beispielsweise eine Tellerfeder sein.

Als Befestigungsringe sind darüber hinaus auch geschlossene auf dem Innenumfang gezackte Ringscheiben bekannt. Diese Ringscheiben können als Tellerfedern ausgebildet sein. Mit einer derartigen umfangsmäßig radial außen geschlossenen Ringscheibe ist eine ausreichend sichere Selbstspannung für eine unverrutschbare Befestigungslage bei hohen auf die Ringscheibe einwirkenden Axialkräften nicht gewährleistet. Außerdem ermöglicht eine solche lediglich an ihrem Innenumfang geschlitzte Ringscheibe nicht axiale Federspannkräfte.

Als Befestigungselement für beispielsweise eine lösbare axiale Verbindung zweier Wellen finden im Stand der Technik Ringscheiben Anwendung, die aus jeweils einem mäanderförmig aufgelösten Ringband bestehen, das in Umfangsrichtung geschlossen über seine gesamte radiale Breite elastisch längenveränderbar ist. Diese Ringscheiben werden allerdings nicht als selbstspannende Befestigungsringe eingesetzt. Jene Ringscheiben werden erst dadurch zu einem Befestigungselement, daß sie in einen von den beiden miteinander zu verbindenden Teilen gebildeten Ringspalt in vertwisteter Form radial innen und außen etwa formschlüssig eingeführt und sodann axial verspannt werden. Vertwistete Form bedeutet hier, daß das Ringband sich in einer von einem Kegel bzw. Konus erzeugten Mantelfläche erstreckt. Indem das Ringband beim axialen Verspannen in Richtung eines ebenen Verlaufes gedrückt wird, verkleinert sich der Innendurchmesser bei gleichzeitiger Vergrößerung des Außendurchmessers. Diese Durchmesserveränderungen führen zu einer radialen Verspannung zwischen dem einen als außen anliegende Buchse ausgebildeten und dem anderen als Welle innen eingreifenden Teil, die miteinander zu verbinden sind. Die axial aufzubringende Verspannung erfolgt in einem solchen Fall beispielsweise über eine an einem der beiden zu verbindenden Teile angreifenden Spannmutter.

Hiervon ausgehend beschäftigt sich die Erfindung mit dem Problem, einen einfach aufgebauten und einen sicheren Halt ohne Zusatzteile gewährenden Befestigungsring zu schaffen.

Eine Lösung für dieses Problem zeigt die Verwendung einer Ringscheibe als Befestigungsring nach den Merkmalen des Anspruchs 1 auf.

Die Erfindung beruht auf dem Gedanken, eine umfangsmäßig elastisch dehnbare Scheibe unter Vorspannung auf ein Trägerteil, das beispielsweise eine Welle oder ein Rohrstutzen sein kann, aufzuschieben oder in ein solches einzuschieben.

Bei einem Aufschieben wird jeweils der Innendurchmesser vergrößert, wodurch eine Längung des Ringbandes über dessen gesamte radiale Breite bewirkt wird. Innerhalb des Ringbandes entsteht dadurch eine Umfangsspannung, die zu einem Vertwisten des Ringbandes in Richtung einer konischen Mantelfläche führt. Der Twisteffekt ergibt sich daraus, daß die radial außen liegenden Ringbandbereiche versuchen, eine ihrem Ausgangsenergiezustand möglichst nahekommende Lage einzunehmen, das heißt das Ringband versucht, eine Lage mit einer möglichst geringen Energieveränderung gegenüber der Ausgangslage einzunehmen. Der Twisteffekt und damit die konische Schrägstellung des Ringbandes nimmt mit zunehmender radialer Aufweitung des Ringbandes zu.

Die durch das Vertwisten erfolgende Schrägstellung des Ringbandes hat ihre Ursache somit in der durch ein Aufweiten des Ringbandes in dessen Umfang erzeugten federnd wirkenden Umfangskraft. Dies bedeutet wiederum, daß durch axiale Kraftanwendung die Schrägstellung des Ringbandes unter Erzeugung einer von dem Ringband axial ausgehenden Federkraft veränderbar ist. Die Federkraft geht dabei von der Umfangskraft aus der elastischen Verformung des Ringbandes aus. Die Federkraft ist damit durch die Durchmesservergrößerung beim Aufschieben der Ringscheibe auf ein Trägerteil einstellbar. Dies bedeutet, daß mit einem gleichen Befestigungsring je nach radialer Vorspannung axial unterschiedlich wirkende Federn realisierbar sind. Das gleiche gilt sinngemäß für einen in einer Hülse eingespannten Befestigungsring.

Mit dem erfindungsgemäß angewandten Befestigungsring steht damit ein Befestigungsmittel zur Verfügung, das bei einer sicheren axialen Fixierung auf einem Trägerteil gleichzeitig als Axialfeder mit voreinstellbarer Federkraft wirkt. Dadurch können zu befestigende Teile axial mit einem solchen Ring verspannt fixiert werden. Dies stellt einen erheblichen Vorteil dar, weil hierfür kein zusätzliches Teil, wie bei den eingangs zum Stand der Technik beschriebenen geschlitzten Befestigungsringen, den sogenannten Sprengringen, erforderlich ist.

Bei den Befestigungsringen ist es zweckmäßig, diese im Ausgangszustand bereits mit einem auf einer Konusfläche verlaufenden schräggestellten Ringband auszubilden. In diesem Fall ist auf einfache Weise im vorhinein sicher festgelegt, in welche Richtung ein Vertwisten des Ringbandes bei einer Längung oder Kürzung erfolgen wird.

Mit Bezug auf ein Vertwisten besitzen Ringscheiben innerhalb des radialen Querschnittes des Ringbandes einen sogenannten Stülpmittelpunkt, von dem aus die Umfangsspannung als radial wirkende Kraft ausgeht. Damit ist der Stülpmittelpunkt S praktisch der für die von dem Ringelement ausgehende Radialspannung maßgebliche Kraftmittelpunkt. Liegt dieser Kraftmittelpunkt außerhalb der radialen Anlagefläche des Ringbandes an einem zugeordneten Trägerteil, so existiert ein Moment, durch das die Ringscheibe eine axial wirkende Federkraft besitzt.

Eine in gespanntem Zustand konisch verlaufende Ringscheibe kann unter axialer Krafteinwirkung gegen eine von dem Ringband erzeugte axiale Federkraft in einen ebenen Zustand verformt werden. Liegt in einem solchen ebenen Zustand das Ringband radial außen oder innen über seine gesamte Höhe flächenschlüssig an einem Trägerteil an, so liegt der Stülpmittelpunkt ebenfalls im Bereich der Ringbandebene und zwar etwa im Mittelbereich der axialen Höhe des Federbandes. Damit kann in einer solchen Lage kein Federmoment zustande kommen, das heißt die Ringscheibe besitzt in einer solchen Lage keine axiale Federkraft. Um dies zu vermeiden, ist die radial innere oder äußere Anlagefläche des Ringbandes derart zu gestalten, daß innerhalb eines vorgebbaren Twistbereiches einschließlich einer ebenen Erstreckung des Ringbandes jeweils ein wirksames Federmoment gegeben ist. Erreicht kann dies dadurch werden, daß die radialen Anlageflächen eine entsprechende Schrägstellung gegenüber der radialen Ringbanderstreckung erhalten. Durch eine solche Gestaltung der radialen Ringband-Umfangsflächen läßt sich insbesondere auch eine Art Linienberührung gegenüber dem Trägerteil, an dem die Ringscheibe verspannt ist, erreichen. Eine solche Linienberührung erhöht die Verschiebefestigkeit der Ringscheibe in axialer Richtung, wodurch die Funktionssicherheit des Befestigungsringes vorteilhaft verbessert wird.

Mit dem Befestigungsring ist insgesamt ein einfaches axial sicher fixierbares Befestigungselement geschaffen, das zusätzlich noch den großen Vorteil besitzt, gleichzeitig eine axial wirkende Feder mit je nach radialer Vorspannung einstellbarer Federkraft darzustellen. Durch diese Federwirkung ist auch bei axial relativ ungenauer Fertigung des zu befestigenden Teiles eine praktisch axial spielfreie Fixierung unter Ausnutzung der axialen Federkraft möglich. In manchen Fällen ist eine axial federnde Lagerung sogar erwünscht oder teilweise auch erforderlich. Dies gilt zum Beispiel dann, wenn ein zu befestigendes Teil durch Wärmeausdehnung bei variierenden Temperaturen seine axiale Länge verändert. Eine federnde Nachspannung ist auch in solchen Fällen erwünscht, in denen ein zu befestigendes Teil durch den Befestigungsring gegen eine Dichtung unter Spannung angedrückt ist und das Material dieser Dichtung im Laufe der Zeit eine plastische Verformung in Richtung einer axialen Verkürzung erfährt.

Ein Ausführungsbeispiel ist in der Zeichnung dargestellt.

In dieser zeigen
- Fig. 1: eine Draufsicht auf einen elastischen Befestigungsring mit einem mäanderförmig aufgelösten Ringband,
- Fig. 2: einen Schnitt durch den Befestigungsring nach Linie II-II in Fig. 1 unter Andeutung einer Anlage an einem zylindrischen Trägerteil,
- Fig. 3 a: einen Ausschnitt nach dem Kreis III in Fig. 2 mit eingetragenen Kräften,

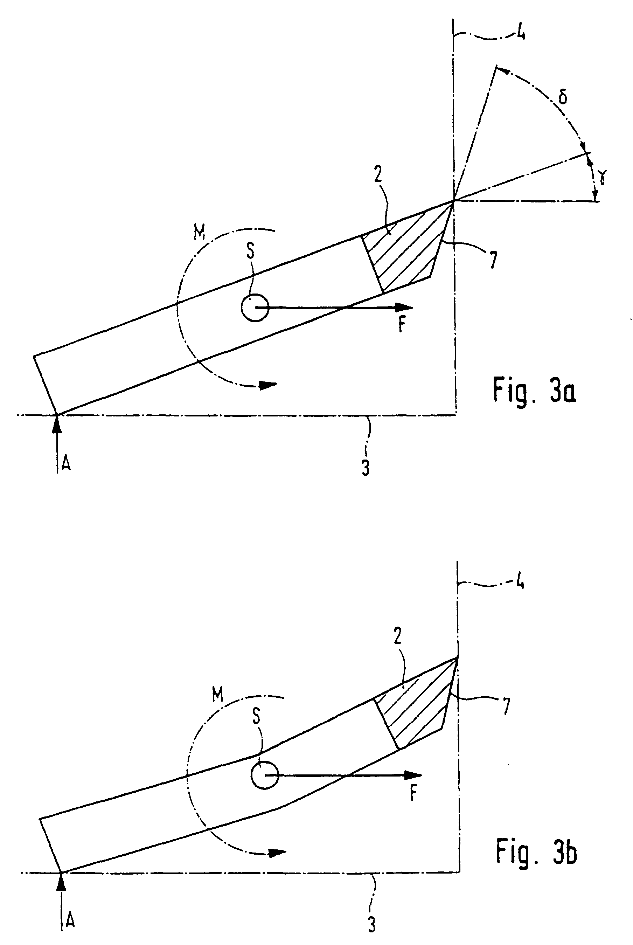

- Fig. 3 b: den Ausschnitt nach Fig. 3 a mit einem "abgewinkelten" Ringbandquerschnitt.

Ein Befestigungsring 1 besteht aus einem in Umfangsrichtung elastisch verformbaren mäanderförmig aufgelösten Ringband 2. Das Material des Ringbandes 2 ist beispielsweise ein Federstahl.

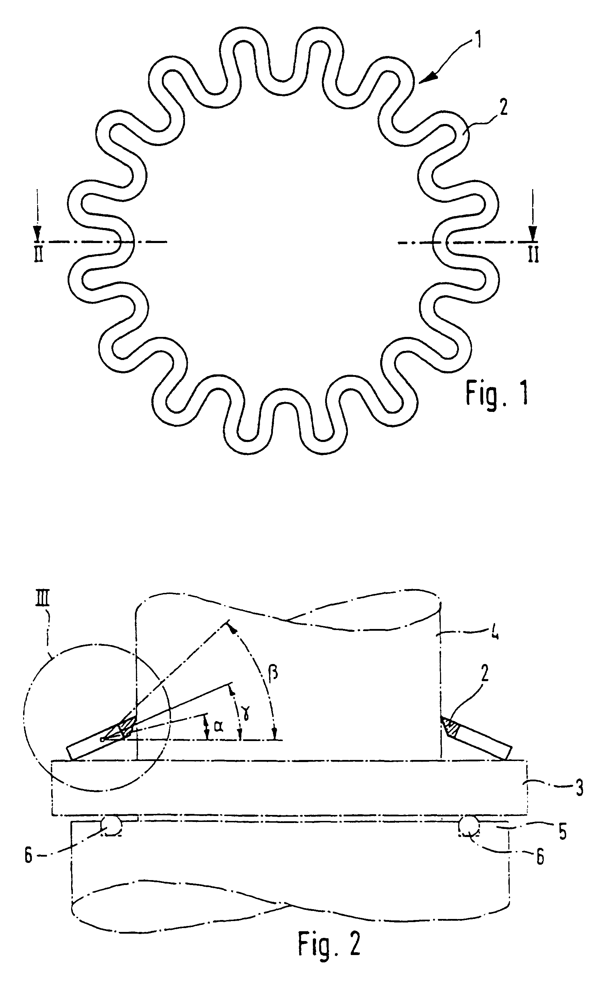

Der Befestigungsring 1 ist in ungespannter Ausgangslage mit einer auf einem konischen Mantel verlaufenden Ausrichtung des Ringbandes 2 geformt. Dieser Konuswinkel ist in Fig. 2 mit α angegeben. Größenmäßig kann dieser Winkel etwa liegen in dem Bereich 0 ° und 45 °.

Um ein Befestigungsteil 3, das beispielsweise eine Platte sein kann, an einem Trägerteil 4, das beispielsweise ein Dorn mit einem Ringbund 5 sein kann, axial spielfrei unter Federspannung fixieren zu können, wird der Befestigungsring 1 umfangsmäßig gedehnt auf den zylindrischen Teil des Trägerteils 4 aufgezogen. Bei diesem Aufziehen des Befestigungsringes 1 vertwistet das Ringband 2 in Richtung auf eine stärkere Schrägstellung, die in Fig. 2 mit dem Winkel β angegeben ist, und den Konuswinkel im Einbauzustand darstellt und damit größer als der Ausgangswinkel α ist. Sodann wird der Befestigungsring 1 unter Anwendung axialer Kraft an das Befestigungsteil 1 angedrückt, wobei das Ringband 2 in Richtung einer verstärkten axialen Federwirkung rückvertwistet wird auf einen Konuswinkel γ, der zwischen dem Ausgangskonuswinkel α und dem Konuswinkel β des lediglich gedehnten, axial unbelasteten, Befestigungsringes 1 wertmäßig liegt.

Die Differenz der Winkel β und γ ergibt den vorgespannten Feder-Ausgleichsweg in axialer Richtung, über den ein axiales Nachspannen möglich ist, wenn eine in dem Ringbund 5 vorgesehene elastische Dichtung 6 im Laufe der Zeit sich unter plastischer Verformung axial verkürzen sollte.

In Fig. 3 a ist ein radial gedehnt an einem Trägerteil 4 anliegendes Ringbandes 2 im Schnitt durch einen Steg dieses Ringbandes 2 dargestellt. Mit S ist die Lage des Stülpmittelpunktes dieses Ringband-Querschnittes angegeben. Dies ist praktisch der Kraftmittelpunkt des Ringband-Querschnittes durch den die Umfangsspannkraft verläuft. Hiervon ausgehend wirkt eine radiale Kraftkomponente F. Mit Bezug auf die Anlage des Ringbandes 2 an dem Trägerteil 4 wirkt ein Moment M. Dieses Moment M wirkt einer von dem Ringbund 5 ausgehenden axialen Anlagekraft A als Federkraft entgegen.

Ein vergrößertes Federmoment M läßt sich durch eine "abgeknickte" Ringbandform, wie sie in Fig. 3 b eingetragen ist, erreichen, da in diesem Fall der Stützmittelpunkt "S" bei gleicher radialer und axialer Gesamterstreckung des Befestigungsringes 1 einen vergrößerten axialen Abstand gegenüber der radial innen liegenden Anlagefläche an dem Trägerteil 4 aufweist. Dadurch liegt wiederum in axialer Richtung ein vergrößerter Hebelarm zur Erzeugung des Federmomentes M vor. Der radiale Abstand des Stülpmittelpunktes "S" bleibt bei der abgeknickten Form praktisch unverändert und damit auch der in dieser Richtung mit Bezug auf ein Moment wirksame Hebelarm.

Die radial innen liegende Anlagefläche 7 des Ringbandes 2 ist gegenüber der Ebene des Ringbandes 2 in einem spitzen Winkel δ ausgeführt. Dadurch bleibt auch bei einer zu der Anlagefläche des Ringbundes 5 parallelen ebenen Ausrichtung des Ringbandes 2 ein federnd wirkendes Moment M erhalten. Ferner gewährleistet eine solche gewinkelte Anlagefläche 7 eine linienförmige Anlage des Ringbandes 2 an dem Trägerteil 4.

Mit einem erfindungsgemäßen Befestigungsring lassen sich somit folgende besonders herausragende Vorteile und Wirkungen erzielen.
- Das Aufbringen einer axialen Kraft A am Außenumfang eines auf einen Dorn als Trägerteil gedehnt aufgezogenen Befestigungsringes 1 verringert die Ringband 2-Twistlage (Konizität) des gespannten Befestigungsringes 1. Hierdurch erfolgt wiederum eine radiale Aufweitung des Kreises der Stülpmittelpunkte des Ringbandes 2, d.h. die Stülpmittelpunkte S der Ringbandquerschnitte wandern nach radial außen. Dies bewirkt eine verstärkte radiale Kraft des Befestigungsringes 1, mit dem dieser an einem Dorn als Trägerteil 4 anliegt,
- eine am Außendurchmesser eines auf einen Dorn als Trägerteil 4 aufgezogenen Befestigungsringes 1 in axialer Richtung wirkende Kraft A erzeugt über etwa die Breite des Ringbandes 2 als Hebelarm ein rechtsdrehendes Moment. Ein linksdrehendes Moment wird auf das Ringband 2 dagegen von einer von dem Trägerteil 4 auf das Ringband 2 ausgehenden Anlage-Reaktionskraft erzeugt. Beide Momente stehen unter Vernachlässigung des Eigendrehmomentes der Stegquerschnitte des Ringbandes im Gleichgewicht,
- durch geeignete Dimensionierung des mäznderförmig verlaufenden Ringbandes 2 kann die radiale Steifigkeit des Befestigungsringes 1 vorbestimmt werden,
- durch eine gezielte Wahl des radial inneren Anlagebereiches des Ringbandes 2 an dem Trägerteil 4 kann die Länge des parallel zur Achse des Befestigungsringes 1 verlaufenden Hebelarmes (Entfernung zwischen radialem Anlagebereich und Stülpmittelpunkt des Ringbandes 2) vorbestimmt werden,
- die Länge des parallel zur Achse des Befestigungsringes 1 verlaufenden Hebelarmes kann auch durch eine spezielle Formgebung des Ringbandquerschnittes (beispielsweise eine radiale Knickung) beeinflußt werden,
- durch die drei zuletzt genannten Maßnahmen kann bei einem auf ein Trägerteil 4 aufgezogenen Befestigungsring 1 die am Außendurchmesser in Richtung der Achse des Befestigungsringes 1 wirkende Kraft bei gegebener Einbausituation in weiten Grenzen beeinflußt werden. Durch diese drei Maßnahmen lassen sich bei einer axialen Verschiebung des Außendurchmessers für die axiale Federwirkung des Befestigungsringes 1 eine Vielzahl unterschiedlicher Federkennlinien realisieren.

Obwohl in der Zeichnung lediglich eine Ausführungsform gezeichnet ist, bei der der Befestigungsring 1 auf ein zylindrisches Teil aufgespannt ist, kann dieser Befestigungsring 1 mit der gleichen Wirkung auch in eine Hülse eingespannt werden. Es sind dann lediglich die Verhältnisse radial innen und außen vertauscht.

## Patentansprüche

1. Verwendung einer Ringscheibe aus einem mäanderförmig aufgelösten Ringband (2), das in Umfangsrichtung geschlossen und in dieser Richtung über seine gesamte radiale Breite längenveränderbar ist, als radial selbstspannend an einem Trägerteil (4) anliegender Befestigungsring.

2. Verwendung einer Ringscheibe nach Anspruch 1, bei der das Ringband (2) der Ringscheibe in ungespanntem Zustand auf einer Konusfläche verläuft.

3. Verwendung einer Ringscheibe nach Anspruch 1 oder 2, bei der die jeweilige an dem Trägerteil (4) radial spannend zu liegen kommende Anlagefläche (7) des Ringbandes (2) derart gegenüber der Ringbandebene gewinkelt ist, daß die Anlage an dem Trägerteil (4) innerhalb eines für das Ringband (2) vorgebbaren Twistbereiches stets außerhalb einer durch den Kreis der Stülpmittelpunkte (S) des Ringbandes (2) aufgespannten Ebene erfolgt.

4. Verwendung einer Ringscheibe nach einem der vorhergehenden Ansprüche, bei der das Ringband (2) in einem vorbestimmbaren Twistbereich im wesentlichen linienförmig an einem Trägerteil (4) anliegt.

5. Verwendung einer Ringscheibe nach einem der vorhergehenden Ansprüche, bei der der in den Radialebenen des Befestigungsringes (1) liegende scheibenförmige Querschnitt des Ringbandes (2) eine abgeknickte Form im Sinne einer axialen Abstandsvergrößerung zwischen dem Querschnitts-Stülpmittelpunkt S und der radial an einem Trägerteil (4) gegebenen Anlage aufweist.

## Claims

1. Use of a washer made of a sinuous annular band (2) which is closed in the circumferential direction and whose length may be changed in this direction over its entire radial width, as a radially self-tensioning fastening ring resting against a carrier part (4).

2. Use of a washer according to claim 1, in which the annular band (2) of the washer extends in the untensioned state on a conical face.

3. Use of a washer according to claim 1 or 2, in which the respective contact face (7) of the annular band (2) which comes to rest on the carrier part (4) in a radial tensioning manner is angled with respect to the annular band plane in such a way that the contact on the carrier part (4) inside a twist region which can be predetermined for the annular band (2) is always outside of a plane gripped by the circle of the placement centre-points (S) of the annular band (2).

4. Use of a washer according to one of the preceding claims in which the annular band (2) rests against a carrier part (4) substantially linearly in a predeterminable twist region.

5. Use of a washer according to one of the preceding claims, in which the disc-shaped cross-section of the annular band (2) located in the radial planes of the fastening ring (1) has a kinked shape in the sense of an axial spacing enlargement between the cross-section placement centre-point (S) and the radial contact given on a carrier part (4).

## Revendications

1. Utilisation d'une rondelle annulaire provenant d'un ruban annulaire (2) développé en méandres qui, fermé dans le sens périphérique, est variable en longueur dans ce sens sur la totalité de sa largeur radiale, en tant que bague de fixation en appui auto-serrant radialement sur une pièce porteuse (4).

2. Utilisation d'une rondelle annulaire selon la revendication 1, dans laquelle le ruban annulaire à l'état non contraint s'étend sur une surface conique.

3. Utilisation d'une rondelle annulaire selon la revendication 1 ou 2, dans laquelle la surface d'appui (7) venant en appui sous contrainte sur la pièce porteuse (4) du ruban annulaire (2) forme un angle tel par rapport au plan du ruban annulaire, que l'appui sur la pièce porteuse (4) à l'intérieur d'une zone de torsion qui peut être donnée pour le ruban annulaire (2) s'opère toujours en dehors d'un plan sous-tendu par le cercle des points centraux d'inflexion (S) du ruban annulaire (2).

4. Utilisation d'une rondelle annulaire selon l'une des revendications précédentes, dans laquelle le ruban annulaire (2) vient en appui essentiellement tangent, dans une zone de torsion pouvant être déterminée, sur une pièce porteuse (4).

5. Utilisation d'une rondelle annulaire selon l'une des revendications précédentes dans laquelle la section transversale de forme circulaire, se trouvant dans les plans radiaux de la bague de fixation (1) du ruban annulaire (2) présente une forme infléchie au sens d'un agrandissement axial de l'écartement entre un point central d'inflexion de section transversale S et l'appui radial donné sur une pièce porteuse (4).
